# EUROPEAN PATENT APPLICATION

(11) **EP 1 995 157 A1**
(43) Date of publication of application: **26.11.2008**
(21) Application number: 08102565.2
(22) Date of filing: 13.03.2008
(51) Int. Cl.: B62D 49/08

(54) **Method and device for longitudinally balancing an agricultural vehicle.**

(30) Priority: 23.05.2007 IT TO20070365
(71) Applicant: CNH Italia S.p.A., 41100 Modena (IT)
(72) Inventor: Bordini, Giorgio, 41043, Formigine, Modena (IT)
(74) Representative: CNH IP Department

(57) **Abstract**

A method and device (18) for longitudinally balancing an agricultural vehicle (1), in particular a tractor, whereby at least one sensor (23; 26), for detecting at least one respective stress affecting a longitudinal attitude of the agricultural vehicle (1), controls an actuating device (22) of a ballast (20) to move the ballast (20) longitudinally along the agricultural vehicle (1) so as to at least partly compensate the stress.

## Description

### Field of the invention

The present invention relates to a method and device for longitudinally balancing an agricultural vehicle, in particular a tractor.

### Background of the invention

As is known, one of the major hazards when operating an agricultural vehicle is loss of longitudinal stability in the various and, often, difficult conditions in which the vehicle is operated.

More generally speaking, if we consider the longitudinal attitude of an unloaded, stationary agricultural vehicle with its barycentric longitudinal axis substantially horizontal, this longitudinal attitude is altered, and may even be compromised, thus resulting in loss of longitudinal stability and tip-up of the vehicle, whenever any static and/or dynamic force is applied having a vertical component and a point of application some distance from a barycentric plane perpendicular to the barycentric longitudinal axis.

That is, loss of longitudinal stability may occur, for example, when a very heavy projecting implement is connected to a lift member of the vehicle. In certain operating conditions, in fact, the weight of the vehicle alone may not be sufficient to counterbalance the tip-up moment produced when the implement, normally resting on the ground, is lifted off the ground.

The same also applies, whether or not the implement is lifted, when the vehicle is operated over very rough or steep ground.

To safeguard against loss of longitudinal stability caused by a raised implement, agricultural vehicles are equipped with ballast, connected integrally in a fixed position to the end of the vehicle opposite the implement end, to produce a stabilizing moment by which to counterbalance the tip-up moment produced by lifting the implement.

Because the stabilizing moment produced by the ballast is constant and proportional to the weight of the ballast and its distance from the end of the vehicle, the effectiveness of the above known balancing system is seriously impaired by the fact that, for obvious reasons of size, the ballast must project as little as possible from the end of the vehicle, and also, the ballast must not be so heavy as to unnecessarily overload the vehicle in normal operating conditions.

### Object of the invention

It is an object of the present invention to provide an agricultural vehicle balancing method and device which are cheap and easy to implement, and designed to eliminate the aforementioned drawback.

### Summary of the invention

According to the present invention, there is provided a method of balancing an agricultural vehicle, in particular a tractor, as claimed in claim 1 and, preferably, in any one of the claims depending directly or indirectly on claim 1.

According to the present invention, there is also provided a device for balancing an agricultural vehicle, in particular a tractor, as claimed in claim 10 and, preferably, in any one of the claims depending directly or indirectly on claim 10.

### Brief description of the drawings

The invention will now be described further, by way of example, with reference to the accompanying drawings, in which:
Figure 1 shows a schematic, partly sectioned side view of an agricultural vehicle featuring a preferred embodiment of the balancing device according to the present invention;
Figure 2 shows a front view of the Figure 1 vehicle;
Figures 3 and 4 show partly sectioned, partly block plan views of the Figure 1 vehicle in respective different operating configurations;
Figures 5 and 6 show schematic block diagrams of a first and second preferred embodiment, respectively, of a control circuit of the balancing device according to the present invention.

### Description of the preferred embodiment

Number 1 in the accompanying drawings indicates as a whole an agricultural vehicle, in particular a crawler tractor, which has a barycentric longitudinal axis 2, and comprises a frame 3, a body 4, and two known crawler traction devices 5 on opposite sides of axis 2.

At the rear longitudinal end, vehicle 1 comprises a known member 6 for attaching and lifting an implement 7 (shown by the dash line).

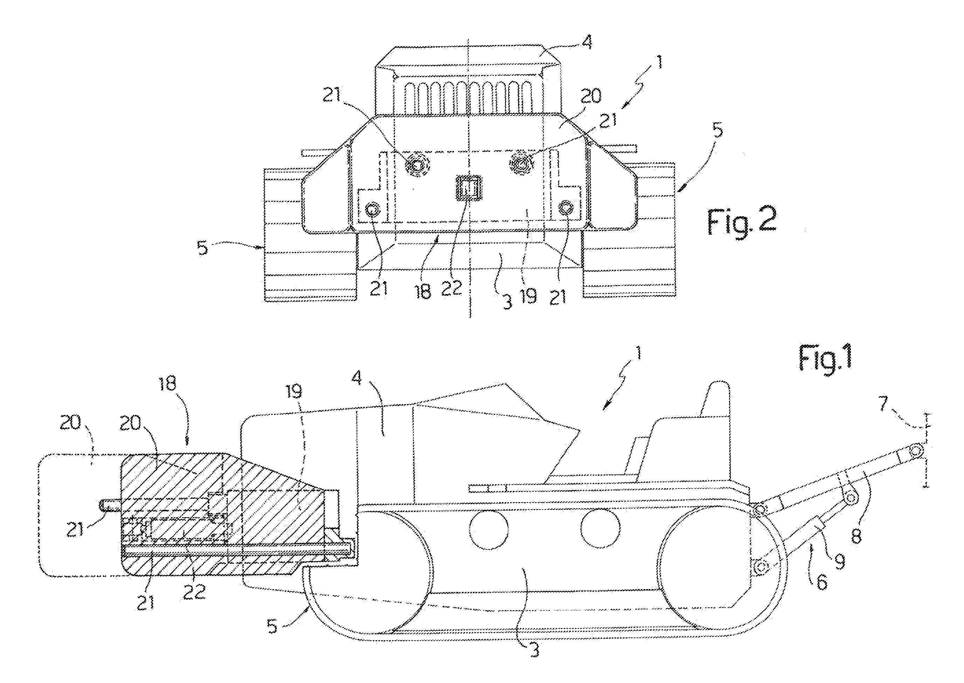

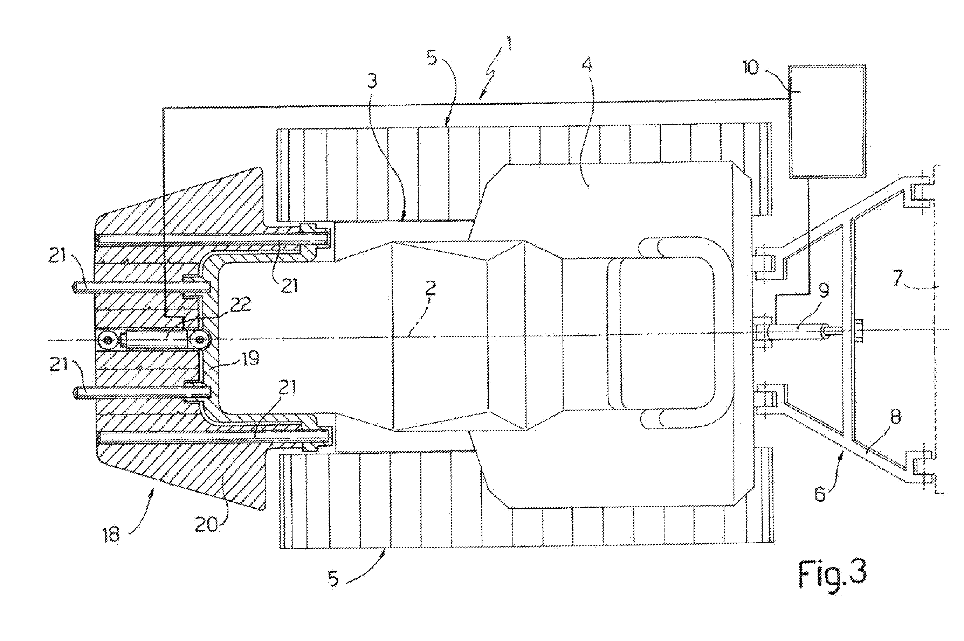

As shown in Figures 1 and 3, member 6 comprises a fork 8 hinged to frame 3 and connectable removably to implement 7; and a known hydraulic cylinder 9 connected to a hydraulic circuit 10 of vehicle 1 and interposed between frame 3 and fork 8 to lift and lower fork 8 and implement 7 with respect to the ground in response to control by the operator.

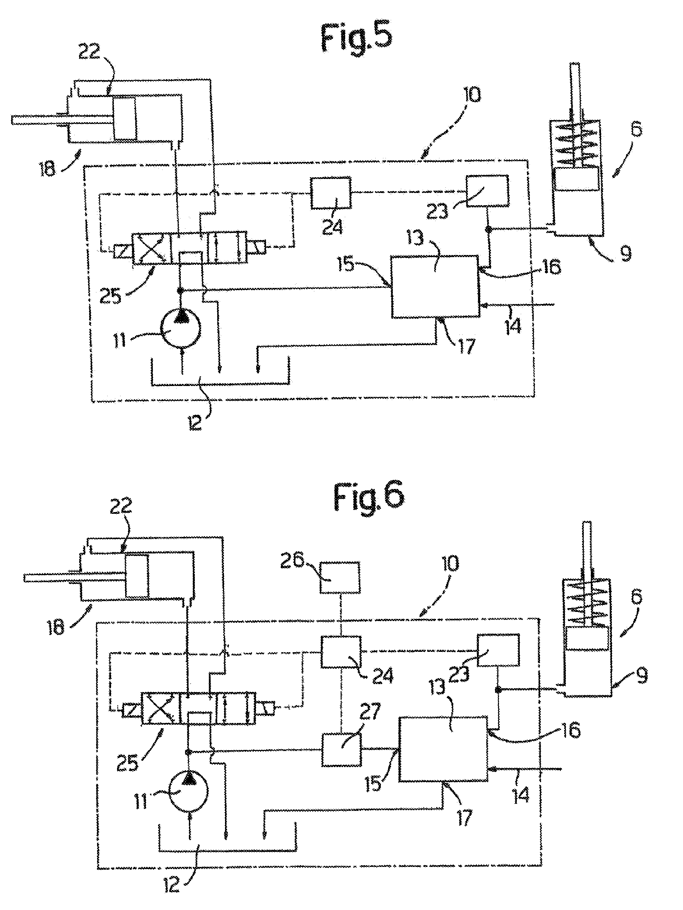

As shown in Figures 5 and 6, hydraulic circuit 10 comprises, in known manner, a pump 11 communicating with an oil tank 12 and for feeding oil to hydraulic cylinder 9 via a valve 13, which is activated by the operator by means of an external control 14. The valve 13 and comprises an inlet 15 connected to the delivery of pump 11, an outlet 16 connected to hydraulic cylinder 9, and a drain 17 communicating with tank 12.

At rest, with implement 7 resting on the ground, inlet 15 and drain 17 of valve 13 are open, and outlet 16 is closed, so that pump 11, kept running by the engine (not shown) of vehicle 1, keeps oil circulating, in a known manner, through valve 13 with no effect on hydraulic cylinder 9. When activated by the operator, external control 14 closes drain 17 and opens outlet 16 in a known manner, thus feeding oil to hydraulic cylinder 9, raising implement 7, and exerting a longitudinal tip-up moment on vehicle 1.

As shown in the accompanying drawings, vehicle 1 is fitted with a balancing device 18 which, as explained in detail below, provides for automatically and, preferably, adjustably balancing vehicle 1 upon detection of stress affecting the longitudinal attitude of vehicle 1.

In the example shown, balancing device 18 - being designed in particular, though not exclusively (as will be seen) to compensate disturbance stress produced by lifting implement 7 - is conveniently connected to the opposite end of vehicle 1 to that fitted with member 6, i.e. to the front end of vehicle 1 in the example shown. Should member 6, however, be connected to the front end of vehicle 1, as is sometimes the case, balancing device 18 is, obviously, conveniently connected to the rear end of vehicle 1.

In the example shown, balancing device 18 comprises a bracket 19 connected rigidly to the front end of frame 3; and ballast 20 fitted in longitudinally sliding manner to bracket 19 by means of four guide rods 21, which are integral with bracket 19, parallel to axis 2, and housed in sliding manner inside respective holes in ballast 20.

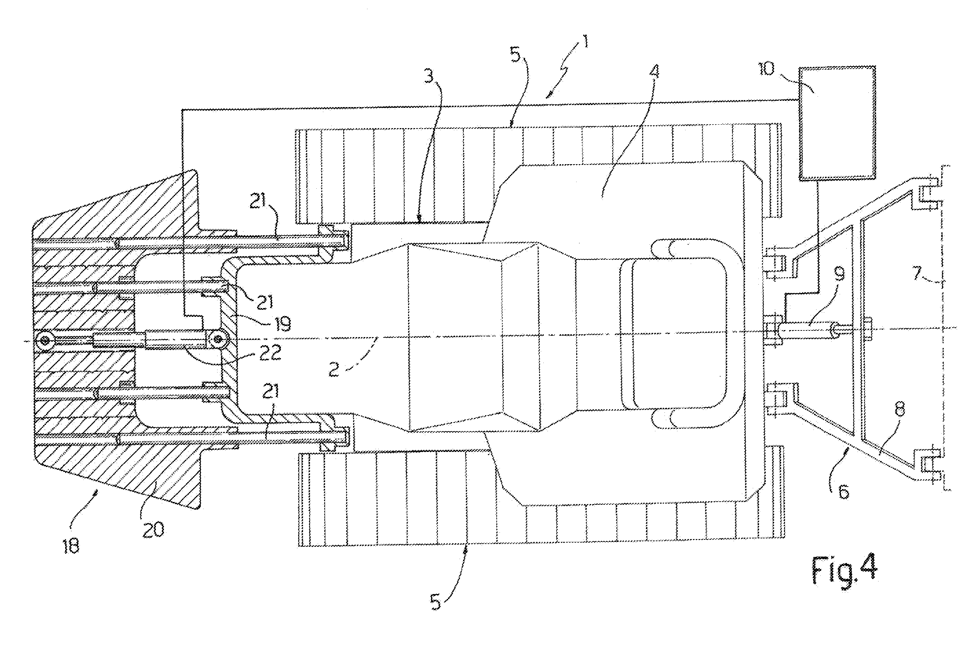

A known double-acting hydraulic actuator 22 is interposed between bracket 19 and ballast 20, is connected to hydraulic circuit 10, and is activated, as explained below, to move ballast 20 longitudinally between a withdrawn position (Figure 3) and an extracted position (Figure 4) in response to disturbance stress producing a tip-up moment capable of rotating vehicle 1 about a horizontal axis crosswise to axis 2.

In a variation not shown, hydraulic actuator 22 is a single-acting hydraulic actuator, the piston of which is connected to a return spring.

As shown in Figure 5, balancing device 18 comprises a sensor 23, which, in the example shown, is a pressure sensor located between output 16 of valve 13 and hydraulic cylinder 9, and which supplies a central control unit 24 with a signal proportional to the pressure inside hydraulic cylinder 9. Central control unit 24 controls a slide valve 25 forming part of hydraulic circuit 10 and located between hydraulic actuator 22 and pump 11.

In actual use, when hydraulic cylinder 9 is activated to lift an implement 7, attached to fork 8, off the ground, sensor 23 detects an increase in oil pressure in hydraulic circuit 10, and transmits a relative signal to central control unit 24, which, if the value of the signal exceeds a given threshold, opens slide valve 25 to feed oil to hydraulic actuator 22 and so move ballast 20 along rods 21 into the extracted position to counterbalance the destabilizing moment produced by lifting implement 7.

In the Figure 6 variation, in addition to sensor 23, balancing device 18 also comprises a sensor sensitive to the effects caused by a different type of disturbance, and which, in the example shown, comprises a longitudinal inclinometer 26 integral with vehicle 1 and sensitive to the longitudinal attitude of vehicle 1.

Like sensor 23, inclinometer 26 transmits a signal to central control unit 24, which, if the signal exceeds a given threshold, opens slide valve 25 to feed oil to hydraulic actuator 22 and so move ballast 20 along rods 21.

Operation of hydraulic actuator 22 in response to a signal from inclinometer 26 is made independent of whether or not a load is attached to fork 8 by means of a control valve 27 located between pump 11 and valve 13 to control the delivery of pump 11 and produce, in the absence of a load attached to fork 8, a pressure allowing oil supply to hydraulic actuator 22.

In a variation not shown, balancing device 18 comprises, together with or instead of ballast 20, further ballast similar to ballast 20 but located at the rear of vehicle 1 to compensate the effects of external stress having a tendency to tip vehicle 1 longitudinally forwards.

In a further variation not shown, in addition to sensor 23 and inclinometer 26, balancing device 18 may comprise further sensors for determining longitudinal displacement of ballast 20 upon detection of disturbance affecting the stability of vehicle 1.

In connection with the above, it should be pointed out that any stress, of whatever nature, tending to destabilize vehicle 1 longitudinally, undoubtedly affects the inclination of axis 2. Consequently, inclinometer 26 or any sensor system, e.g. a system of load cells, sensitive to variations in load distribution on the axles of vehicle 1, may be more than sufficient, on its own, to control longitudinal displacement of ballast 20.

It should be pointed out that the longitudinal displacement of ballast 20 may equal to full travel of the ballast along guide rods 21 (control circuit open) or to a portion of its full travel, proportional to the degree of disturbance which is detected (feedback-closed control circuit).

Finally, an important point to note is that maintaining a stable longitudinal attitude of vehicle 1 by means of movable ballast 20 also has the advantage of minimizing noise and vibration of crawler traction devices 5.

## Claims

1. A method of longitudinally balancing an agricultural vehicle (1), in particular a tractor, the method being **characterized by** comprising the steps of:
- detecting, by means of sensor means (23; 26), the effects on the agricultural vehicle (1) of stress affecting a given longitudinal attitude of the agricultural vehicle (1); and
- controlling, in response to an output signal of the sensor means (23; 26), an actuating device (22) of at least one ballast (20) movable longitudinally along the agricultural vehicle (1), so as to move the ballast (20) in such a way as to at least partly compensate said effects.

2. A method as claimed in claim 1, wherein the sensor means (23; 26) emit signals of an intensity proportional to said effects.

3. A method as claimed in claim 1 or 2, wherein the actuating device (22) is activated in response to a signal emitted by the sensor means (23; 26) if the signal is of an intensity above a given threshold.

4. A method as claimed in one of the foregoing claims, wherein, when activated, the actuating device (22) moves the ballast (20) longitudinally between a fully withdrawn position and a fully extracted position.

5. A method as claimed in one of claims 1 to 4, wherein, when activated, the actuating device (22) moves the ballast (20) in proportion to the intensity of said signal.

6. A method as claimed in one of the foregoing claims, wherein said stress comprises a load and a tip-up moment caused by raising an implement (7) being connected to and projecting from the agricultural vehicle (1), off the ground by means of hydraulic lifting means (6) comprising a hydraulic feed circuit (10); the detecting step detecting an internal pressure of the hydraulic feed circuit (10) by means of the sensor means (23).

7. A method as claimed in one of the foregoing claims, wherein the actuating device (22) is a hydraulic actuator (22) supplied with pressurized fluid via valve means (25) controlled by a central control unit (24) connected to the sensor means (23; 26).

8. A method as claimed in claim 7, wherein the hydraulic feed circuit (10) and the hydraulic actuator (22) communicate with each other via valve means (25).

9. A method as claimed in one of the foregoing claims, wherein said stress is such as to affect the longitudinal inclination of the agricultural vehicle (1); the sensor means (26) comprising an inclinometer (26).

10. A device for longitudinally balancing an agricultural vehicle (1), in particular a tractor, the device comprising at least one ballast (20) movable longitudinally along the agricultural vehicle (1);
**characterized in that** the device further comprising sensor means (23; 26) for detecting the effects on the agricultural vehicle (1) of stress affecting a given longitudinal attitude of the agricultural vehicle (1); and an actuating device (22) connected to the ballast (20) to move the ballast (20) longitudinally in such a way as to at least partly compensate said effects in response to a signal from the sensor means (23; 26).

11. A device as claimed in claim 10, wherein said sensor means (23; 26) emit signals of an intensity proportional to said effects.

12. A device as claimed in claim 10 or 11, wherein the actuator device (22) is a hydraulic actuator (22).

13. A device as claimed in claim 12, and comprising a central control unit (24) connected to the sensor means (23; 26); and a circuit for feeding pressurized fluid to the hydraulic actuator (22); the circuit comprising valve means (25) controlled by the central control unit (24).

14. A device as claimed in one of claims 10 to 13, wherein the sensor means (23) are means for sensing a pressure in a hydraulic feed circuit (10) of hydraulic lifting means (6) for lifting an implement (7), connected to and projecting from the agricultural vehicle (1), off the ground.

15. A device as claimed in claims 13 and 14, wherein the hydraulic actuator (22) and the hydraulic feed circuit (10) communicate with each other via valve means (25).

16. A device as claimed in one of claims 10 to 13, wherein the sensor means (26) comprise an inclinometer (26).

17. A device as claimed in one of claims 10 to 16, wherein the device comprising a bracket (19) connected integrally to one end of the agricultural vehicle (1); and guide means (21) fitted to the bracket (19) and extending longitudinally with respect to the agricultural vehicle (1); the ballast (20) being mounted on the guide means (21) to slide along the guide means (21) between a withdrawn position and an extracted position; and the actuating device (22) being interposed between the ballast (20) and the bracket (19).

18. An agricultural vehicle (1), in particular a tractor, comprising a longitudinal balancing device (18) as claimed in one of claims 10 to 17.

19. An agricultural vehicle (1) as claimed in claim 18 wherein the agricultural vehicle (1) comprising, at a first longitudinal end, hydraulic lifting means (6) for lifting an implement (7) off the ground; the ballast (20) being fitted in sliding manner to a second end, opposite the first end, of the agricultural vehicle (1).
